Europäisches Patentamt

European Patent Office

Office européen des brevets

(11) Publication number: **0 318 127**
**A2**

## (12) EUROPEAN PATENT APPLICATION

(21) Application number: 88303338.3

(22) Date of filing: 13.04.88

(51) Int. Cl.⁴: **B60R 22/26** , **B60R 22/20** ,
**B60R 22/46**

(30) Priority: 14.04.87 GB 8708933

(43) Date of publication of application:
31.05.89 Bulletin 89/22

(84) Designated Contracting States:
DE ES FR GB IT

(71) Applicant: **GENERAL ENGINEERING
(NETHERLANDS) B.V.**
**Maliebaan 74**
**NL-3581 CW Utrecht(NL)**

(72) Inventor: **Laun, Ulrich**
**Stoverstrasse 74**
**D-2090 Drage(DE)**

(74) Representative: **Frankland, Nigel Howard et al**
**FORRESTER & BOEHMERT**
**Widenmayerstrasse 4/I**
**D-8000 München 22(DE)**

(54) A safety belt arrangement.

(57) A safety belt arrangement incorporates an elongate housing to be secured to the chassis of a vehicle, the housing defining at least one set of ratchet teeth (11,12). A connection element (14) slides relative to the housing (7) and carries at least one toothed ratchet member (19,20) adapted to engage the ratchet teeth. The toothed members (19,20) are biassed to engagement with the ratchet teeth (11,12) and an actuating arrangement (29) is provided to overcome the bias and disengage the toothed members (19,20) from the ratchet teeth (11,12) when the buckle (5) which is connected to the connection element, is to be moved.

Fig.2.

Fig.3.

## "A safety belt arrangement"

THE PRESENT INVENTION relates to a safety belt arrangement and more particularly to a safety belt arrangement for use in an automobile such as a motor car.

In a conventional motor car at least the front seat passengers are provided with a safety belt which has three anchoring points. Two anchoring points for the belt are usually located at the base and at the top of the so-called "B-post" of the vehicle, and the third anchoring point is usually located towards the centre of the car adjacent the squab of the seat. This third anchoring point usually consists of a buckle adapted to receive a tongue mounted on a part of the safety belt.

It is important, if a safety belt is to retain adqequately a passenger in a motor vehicle involved in an accident, that the safety belt should have the correct geometry relative to the passenger. If the anchoring point located towards the centre of the car is not in the correct position relative to the seat it is possible that the person restrained by the safety belt may "submarine" underneath the lap-portion of the safety belt or may slip out of the safety belt in some other way.

In most modern cars the three anchoring points mentioned above are fixed in position, and in particular it is conventional for the buckle located adjacent the centre of the vehicle to be securely and directly fastened to part of the chassis of the motor vehicle.

The front seats of most motor cars move forwards and backwards, and also, in most modern cars, the squab of the front seat also moves up and down. Such movements of the seat serve to vary the position of a person wearing the saftey belt, and the buckle. As a result, the optimum belt geometry is not always present when there is a crash situation.

It is to be understood, of course, that the seat belt buckle, as mentioned above, withstands a very large force in an accident situation, and it is thus essential that the seat belt buckle is connected, in some way, to the vehicle chassis, such that the seat belt buckle can withstand such a force without moving in an undesirable manner.

DE-3243550-A1 discloses a safety belt arrangement in which the height of the buckle is adjusted automatically in response to adjustment of the height of the seat squab.

The arrangement includes a housing which is securely fixed in position relative to the chassis which defines an elongate slot, the edges of the slot being associated with ratchet teeth. A locking assembly can move up and down relative to the slot. The locking assembly includes a first member, to which the safety belt buckle is securely attached. This first member can move, with a lost motion relative to a second member that is fixed to the car seat.

There are two ratchet members adapted to engage with the ratchet teeth which are normally spring biassed to a dis-engaged position but which are moved, by a cam effect, into an engaged position if the seat belt buckle moves upwardly without a simultaneous upward movement of the member attached to the vehicle seat.

In this arrangement the device is usually in an unlocked condition with the ratchet members spring biassed away from the ratchet teeth and thus the described assembly can usually slide freely up and down the channel as the height of the seat is adjusted. However, in an accident situation, it is often the case that very large forces arise very swiftly, and it is possible that in an accident situation the two ratchet members would not engage the teeth associated with the slot but instead might bounce on the tops of the teeth. Thus locking would not occur and the buckle would move upwardly. In an accident situation this would be extremely undesirable and could even prove to be fatal.

The present invention seeks to reduce or obviate the disadvantages found in the prior art.

According to this invention there is provided a safety belt arrangement incorporating an elongate element adapted to be secured to the chassis of the vehicle, or to a movable element which is mounted on the chassis, the elongate element defining at least one set of ratchet teeth, a connection element adapted to be connected to a buckle and to slide relative to the elongate element, the connection element carrying at least one toothed member adapted to engage said ratchet teeth, where said toothed member is biassed into engagement with said ratchet teeth. actuating means being provided to overcome the bias to disengage said toothed member from the ratchet teeth when the buckle(5) is to be moved

Preferably the or each toothed member comprises a pivotally mounted ratchet member, which is spring biassed to engage the ratchet teeth.

Conveniently the elongate element is in the form of a channel-shaped member. having an axially extending elongate aperture, two opposed sides of the aperture defining the ratchet teeth, the connecting element being slidably mounted on the channel member, with the toothed member received within the aperture.

Preferably the or each toothed member carries

2

a projecting pin, the said actuating means comprising a member having one or more apertures through which the said pins may pass, the apertures being configured such that when the actuating member is moved in a predetermined direction, parts of the periphery of each aperture engage the pins and move the toothed members to such a position that the teeth on the toothed members become disengaged from the said ratchet teeth, the arrangement being such that if the actuating member is moved in the opposite direction the toothed member will ratchet relative to the ratchet teeth.

Conveniently the actuating member comprises a plate defining two triangular apertures, through which the pins pass the plate further being connected to part of the squab of a seat adjacent the buckle, so that the actuating member moves upwardly and downwardly in response to upward and downward movement of said seat squab.

Preferably the actuating member is releasable attached to the seat in such a way that the actuating member may move downwardly, when sufficient force is applied thereto, even if the seat does not move downwardly.

Advantageously the actuating element is connected to the seat squab by means of an element which is held in position by a frangible pin, the pin being adapted to break if the actuating element is moved downwardly with sufficient force.

Preferably the actuating element is associated with part of a pre-tensioner adapted to move the actuating element downwardly with considerable force in an accident situation.

Conveniently wherein two toothed members are provided biassed apart by a spring engaging pins on the toothed members.

In order that the invention may be more readily understood, and so that further features thereof may be appreciated, the invention will now be described, by way of example with reference to the accompanying drawings in which

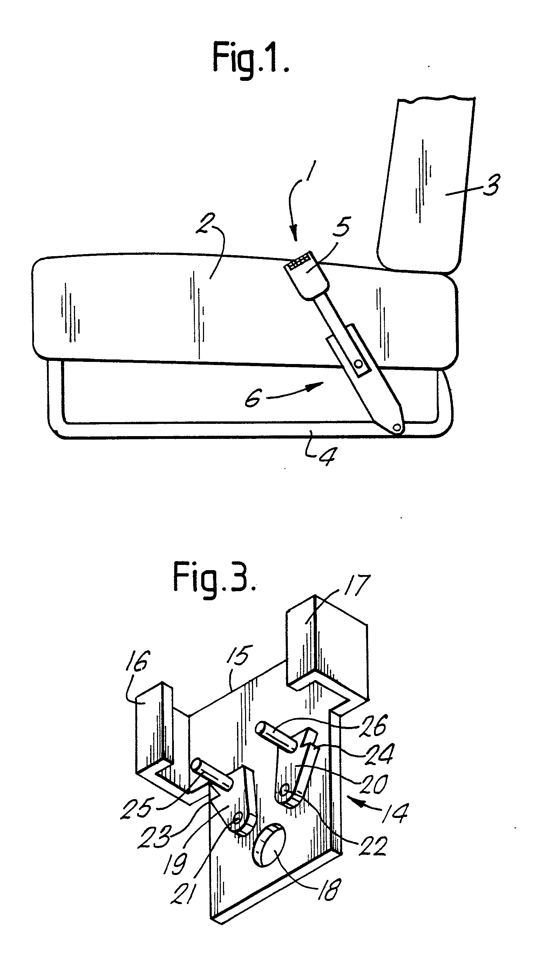

FIGURE 1 illustrates part of a seat of a motor vehicle and an associated buckle for use with the safety belt and a mounting arrangement for buckle,

FIGURE 2 is a perspective view of a channel member that forms a major component of the mounting arrangement,

FIGURE 3 is a perspective view of a connection element that is slidably mounted on the channel,

FIGURE 4 is a rear perspective view of the connection element,

FIGURE 5 is a perspective view of an actuator element that is slidably mounted on the channel,

FIGURE 6 is a side view of the actuator element showing various items that co-operate with it,

FIGURE 7 is a perspective view of a cover member,

FIGURE 8 is a perspective view of a biassing spring,

FIGURE 9 illustrates the co-operation between the apertures in the cover, and the biassing spring with the ratchet members, and

FIGURE 10 is a perspective view illustrating the co-operation between the apertures on the actuator member and two ratchet elements present on the support member.

Referring initially to the drawings, a vehicle seat 1 has a squab 2 and a back 3. The seat is supported for movement on a shoe 4 which is slidably mounted on a rail (not shown) which is secured to the floor of the vehicle.

A buckle 5 is provided, located adjacent the squab of the seat, adapted to receive a tongue of a safety belt.

The buckle 5 is maintained in position by a mounting arrangement 6.

As will be described hereinafter, the mounting arrangement 6 is such that as the squab of the seat is moved up and down, so that buckle 5 is also moved up and down in a similar manner. Thus the position of the buckle 5 relative to the squab 2 of the seat is always the same. As will be described, in this embodiment the mounting arrangement 6 is secured to the shoe 4, and thus the buckle 5 will also move forwardly and backwardly as the seat 1 is moved forwardly and backwardly.

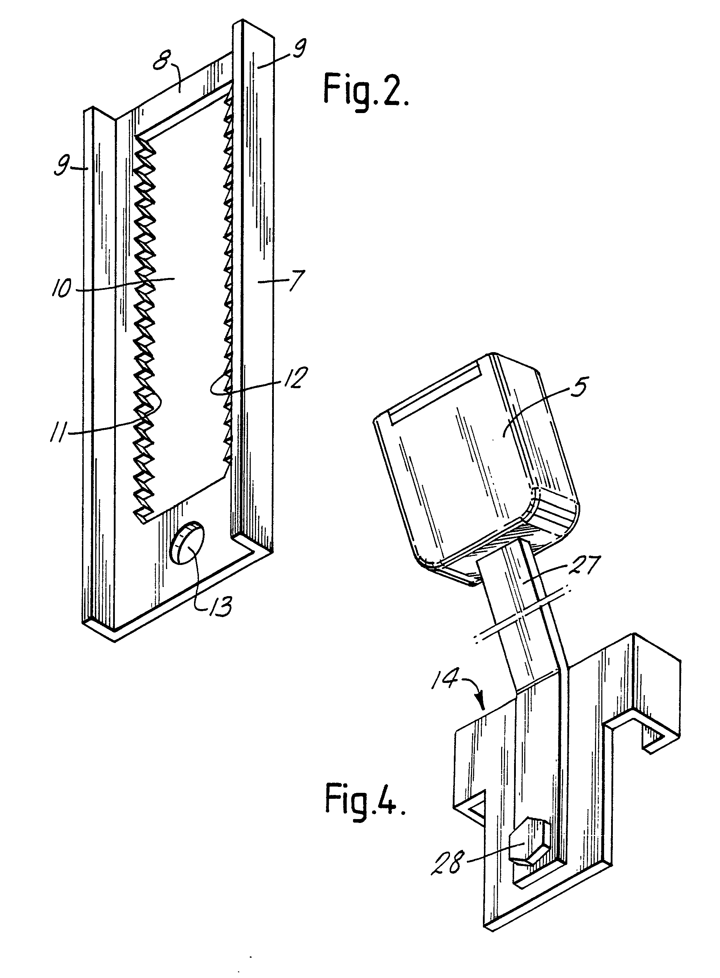

The mounting arrangement 6 comprises, as a main element, a channel-shaped anchoring element 7, as shown in Figure 2. The anchoring element consists of a channel having a base 8 and two upstanding side walls 9. The base 8 is provided, in its central region, with an elongate rectangular aperture 10, the two axially extending side walls of which are provided with inwardly directed ratchet teeth 11,12. The anchoring element 7 is also provided with an aperture 13 at one end to receive a bolt to connect the element to the chassis of the vehicle, or to an element, such as the shoe 4, which in turn is connected to the chassis of the vehicle.

A connecting element 14 is provided, as shown in Figure 3 which is slidably mounted on the channel. The connecting element 14 comprises a base region 15 of generally "tee" configuration. The head of the "tee" is provided. at its opposed ends with upwardly and inwardly extending lips 16,17 which are dimensioned to be located so that they embrace the channel 7. The connecting element is provided with an aperture 18.

Mounted on the main body portion of the "tee" are two ratchet members 19,20. The ratchet members are each pivotally mounted adjacent one end 21,22 and are provided with respective outwardly directed ratchet teeth 23,24. Each ratchet member is provided with an upwardly extending peg 25,26.

It will be appreciated that when the anchoring element 7 is assembled together with the connector element 14, the ratchet members 19,20 will be received within the aperture 10 and the teeth 23,24 of the ratchet members may engage the corresponding ratchet teeth 11,12 provided on the anchoring element. The ratchet members may be moved pivotally about the pivot points 21,22 to disengage the teeth 23,24 from the cor responding teeth 11,12 and with the ratchet members in that condition the connecting element 14 may move freely up and down the anchoring element 7.

Figure 4 shows the reverse side of the connecting element 14 and illustrates that a buckle 5 is securely connected to the connecting element 14 by means of a metalic strap 27 which is secured to the connecting member 14 by means of an appropriate bolt 28, which passes through the aperture 18.

An actuating member 29 is provided which is mounted for sliding relative to the connecting element 14 and thus also sliding relative to the anchoring element 7. The actuating member 29 consists of a platelike portion 30 which defines two triangular apertures 31,32. The apertures 31,32 are positioned and dimensioned such that the pegs 25,26 on the ratchet members 19 and 20 may project through the apertures. The apertures are of triangular configuration, the triangles being right-angled triangles having their appexes directed downwardly.

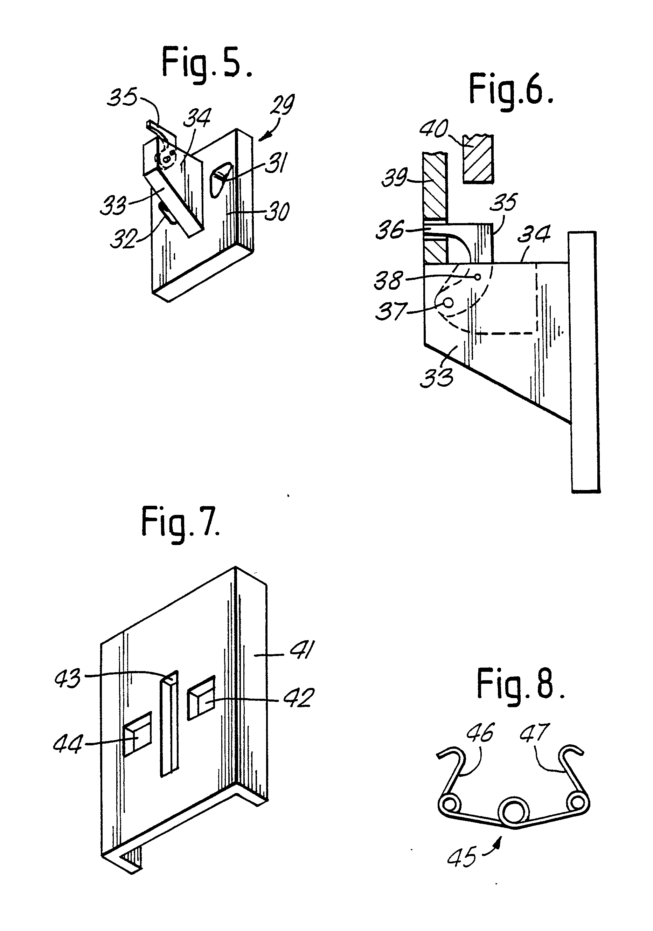

The plate 30 carries a forwardly projecting element 33 which has a planar upper surface 34. An anvil-like member 35 is pivotally connected to the projecting element 33 and may be moved to such a position that part 36 of the anvil member 35 projects forwardly at a position located above the horizontal surface 34. Preferably the anvil-like member is maintained in this position in a suitable way. For example, the anvil member may be pivoted on a pivot pin 37, and may be retained in the position illustrated in Figure 6 by a frangible pin 38 which passes through an appropriate aperture in the anvil member 35 and also passes through the projection 33. If the frangible pin 38 is broken the anvil member may pivot into a recess formed in the projection 33.

It can be seen that a forward-most part 36 of the anvil member passes through an aperture formed in a sheet 39 which forms part of or is connected to the squab 2 of the seat 1. It will thus be seen that if the seat 1 moves upwardly, then the portion 36 will be engaged by the aperture in the sheet 39, and the actuating member will tend to move upwardly. However, if the squab 2 of the seat is lowered, then the lower edge of the sheet 39 will engage the upper surface 34 of the projection 33 and the actuating member will tend to move downwardly.

A part of a pre-tensioner 40 is also located above the horizontal surface 34, and the purpose of this component will be described hereinafter.

A cover 41 is provided adapted to lie over the actuating member 29. The cover may be secured to the connector element 14 in some convenient way. The cover is provided with three elongate apertures 42,43,44 therein. The apertures are all parallel. The aperture 43 is adapted to receive the projection 33, and the apertures 42 and 44 are adapted to receive the pegs 25,26 which project from the ratchet members 19,20.

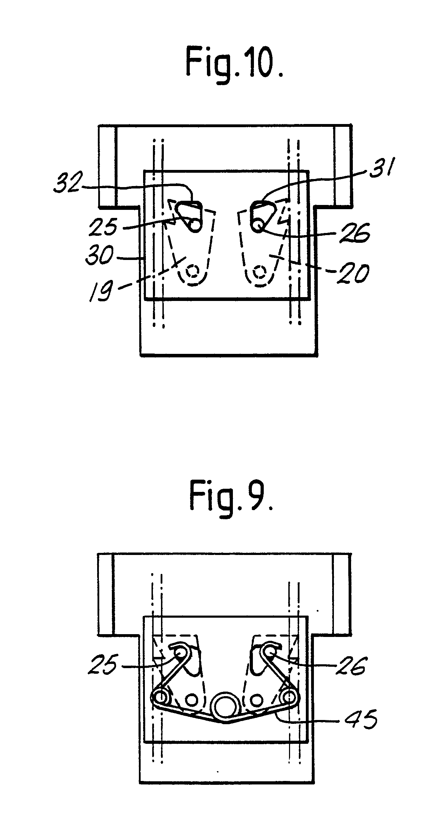

A spring 45 is provided, as shown in Figure 8 having two terminal arm portions 46,47 which are resiliently biassed outwardly, these arms being adapted to engage the pegs 25,26 present on the ratchet members as shown in Figure 9 and to bias the ratchet members outwardly so that the teeth 23,24 are brought into contact with the teeth 11,12 on the anchoring element.

As can be seen from a consideration of Fig ure 10, which illustrates the ratchet members and also, superimposed thereon, the apertures 31,32 through which pass the pegs 25,26, if the actuating member 29 is moved upwardly, the sloping faces of the apertures 31,32 will engage the pegs and will thus tend to move the ratchet members pivotally inwardly to the position illustrated in Figure 10 thus disengaging the teeth on the ratchet members from the teeth on the anchoring element, thus enabling the connecting element 14 to slide up the channel-shaped anchoring element 1. However, if a downward force is applied to the actuating element, then the actuating element will move downwardly until the pegs present on the ratchets engage the upper-most parts of the apertures 31 and 32, and then the connecting member 14 will also move downwardly, with the ratchet members ratcheting against the spring bias.

It will thus be appreciated that the position of the connecting member may be readily adjusted upwardly and downwardly in response to upward and downward movements of the squab of the seat since, as has been described, if the plate 39 moves upwardly the actuating element moves upwardly and the connecting element also moves upwardly, whereas if the plate moves downwardly then the actuating element moves downwardly and the connecting element moves downwardly.

It is to be noted, however, that at all material times, when an accident could occur, the teeth 23,24 on the ratchet elements are firmly engaged with the teeth 11,12 on the anchoring element. Thus the connecting element cannot move upwardly during an accident situation.

Mention was made, with reference to Figure 6, to a pre-tensioner having an element 40.

It has been proposed previously to provide a pre-tensioner to apply a predetermined tension to a seat belt in an accident situation. The reason for this is that in a normal accident situation, a certain length of safety belt is paid out by a retractor reel before is locks. This enables a passenger restrained by the safety belt to move forwardly relative to the vehicle. The passenger will then be decelerated, relative to the vehicle, by the safety belt which will inevitably stretch to a certain extent. Also if a passenger is wearing loose fitting clothing this will be compressed again permitting the passenger to move forwards. The combination of the forward movement of the passenger and the subsequent stretch of the belt may be sufficient to cause the passenger to come into contact with teh windscreen or the steering wheel with a sufficient momentum to injure himself. Thus a pre-tensioner applies a tension to the safety belt, thus serving to minimise this effect. This is achieved, in many pre-tensioners, by effecting a downward force on the buckle, such as the buckle 5.

A typical pre-tensioner is disclosed in European Patent publication 0239925, to which Specification the present reader is addressed.

In the presently described embodiment of the invention a pre-tensioner is provided which, in an accident situation, causes the element 40 to move downwardly, with considerable force. As the element 40 moves downwardly, it hits the anvil member 35 and causes the frangible pin 38 to break, enabling the anvil member to pivot about the pivot pin 37. This disengages the forward most part 36 of the anvil member from the sheet 39. The actuating member may then move downwardly. As the actuating member moves downwardly, as has been described above, the ratchets will effect a ratcheting action, but at the end of the downward movement of the actuating element 29 the ratchet elements will be moved. by the spring 45 into a locking position, thus preventing upward movement of the connecting member 14. Thus the pre-tensioner will operate, as desired, to move the buckle downwardly, with the buckle then being retained in position.

## Claims

1. A safety belt arrangement incorporating an elongate element(7) adapted to be secured to the chassis of the vehicle, or to a movable element which is mounted on the chassis, the elongate element defining at least one set of ratchet teeth(11,12), a connection element(14) adapted to be connected to a buckle(5) and to slide relative to the elongate element(7), the connection element carrying at least one toothed member(19,20) adapted to engage said ratchet teeth, characterised in that said toothed member(19,20) is biassed into engagement with said ratchet teeth(11,12), actuating means(29) being provided to overcome the bias to disengage said toothed member(19,20) from the ratchet teeth(11,12) when the buckle(5) is to be moved.

2. A safety belt arrangement according to Claim 1 wherein the or each toothed member(19,20) comprises a pivotally mounted ratchet member, which is spring biassed to engage the ratchet teeth.

3. A safety belt arrangement according to Claim 1 or Claim 2 wherein the elongate element(7) is in the form of a channel-shaped member, having an axially extending elongate aperture(10), two opposed sides of the aperture(10) defining the ratchet teeth(11,12), the connecting element(14) being slidably mounted on the channel member, with the toothed member(19,20) received within the aperture.

4. A safety belt arrangement according to any one of the preceding Claims wherein the or each toothed member(19,20) carries a projecting pin(25,26), the said actuating means comprising a member(29) having one or more apertures(31,32) through which the said pins may pass, the apertures being configured such that when the actuating member is moved in a predetermined direction, parts of the periphery of each aperture engage the pins and move the toothed members to such a position that the teeth on the toothed members become disengaged from the said ratchet teeth(11,12), the arrangement being such that if the actuating member is moved in the opposite direction the toothed member(19,20) will ratchet relative to the ratchet teeth.

5. A safety belt arrangement according to Claim 4 wherein the actuating member comprises a plate(29) defining two triangular apertures(31,32), through which the pins(25,26) pass the plate further being connected to part of the squab(2) of a seat adjacent the buckle, so that the actuating member moves upwardly and downwardly in response to upward and downward movement of said seat squab.

6. A safety belt arrangement according to Claim 5 wherein the actuating member is releasable attached to the seat in such a way that the actuating member may move downwardly, when sufficient force is applied thereto, even if the seat does not move downwardly.

7. A safety belt arrangement according to Claim 6 wherein the actuating element is connected to the seat squab(2) by means of an element which is held in position by a frangible pin(38), the pin being adapted to break if the actuating element is moved downwardly with sufficient force.

8. A safety belt arrangement according to any one of Claims 5 to 7 wherein the actuating element(29) is associated with part of a pre-tensioner adapted to move the actuating element downwardly with considerable force in an accident situation.

9. A safety belt arrangement according to any one of the preceding Claims wherein two toothed members(19,20) are provided biassed apart by a spring(45) engaging pins(25,26) on the toothed members.

# Fig.1.

# Fig.3.

Fig.2.

Fig.4.

EP 0 318 127 A2

Fig.5.

Fig.6.

Fig.7.

Fig.8.

# Fig.10.

# Fig.9.